# EUROPEAN PATENT APPLICATION

(11) **EP 4 472 247 A1**
(43) Date of publication of application: **04.12.2024**
(21) Application number: 23746153.8
(22) Date of filing: 17.01.2023
(51) Int. Cl.: H04W 4/029

(54) **INFORMATION PROCESSING METHOD, AND USER EQUIPMENT AND STORAGE MEDIUM**

(30) Priority: 28.01.2022 CN 202210104506
(71) Applicant: Datang Mobile Communications Equipment Co., Ltd., Beijing 100085 (CN)
(72) Inventor: YAN, Xue, Beijing 100085 (CN); YAN, Nan, Beijing 100085 (CN)
(74) Representative: Cabinet Nony
(86) International application number: PCT/CN2023/072707
(87) International publication number: WO 2023/143271

(57) **Abstract**

The application relates to the technical field of wireless communications. Provided are a method for information processing, a user equipment, UE, and a storage medium. After receiving a first command, the UE can record mobility history information generated by the UE at SCG side, where the first command includes an SCG reconfiguration with sync command, and an SCG deactivation indication. By means of the method, when the UE receives an SCG reconfiguration with sync command and indicates an SCG in deactivation state, the UE can still record mobility history information on SCG side.

## Description

### CROSS-REFERENCE TO RELATED APPLICATION

This application claims priority to Chinese Patent Application No. 202210104506.1, entitled "METHOD FOR INFORMATION PROCESSING, USER EQUIPMENT AND STORAGE MEDIUM" and filed with the CNIPA on January 28, 2022, the entire contents of which are incorporated herein by reference.

### TECHNICAL FIELD

The application relates to the technical field of wireless communications, and in particular, to a method for information processing, a user equipment and a storage medium.

### BACKGROUND

During access of a UE to a network for communication, the UE needs to record mobility history information on a secondary cell group (SCG) side and report to a network side according to communication requirements.

An SCG deactivation state is introduced into a multi-radio dual connectivity, MRDC, project. When there is no data transmission on the SCG side, the network side may deactivate the SCG. When the network side intends to activate the SCG, the network side may send an SCG activation command to reactivate the SCG.

Currently, when the UE receives an SCG-side reconfiguration with sync command and indicates an SCG in deactivation state , the UE will not immediately perform a random access channel (RACH) procedure to access a primary SCG cell (PSCell) of a target SCG, and is not performing the RACH procedure to access the PSCell of the target SCG until the target SCG is activated. This will affect recording and reporting of mobility history information on a current SCG side by the UE.

### SUMMARY

The application provides a method for information processing and a UE, with which when the UE receives an SCG reconfiguration with sync command and indicates an SCG in deactivation state, the UE would still record mobility history information on SCG side.

In a first aspect, the application provides a method for information processing, applied to a UE, the method includes:
receiving a first command, where the first command includes an SCG reconfiguration with sync command and an SCG deactivation indication; and
recording a mobility history information generated by the UE at SCG side.

In an optional embodiment, the mobility history information includes at least one of the following:
a first mobility history information generated by the UE in a PSCell of a source SCG, the PSCell of the source SCG being a PSCell currently accessed by the UE;
a second mobility history information generated by the UE in a PSCell of a target SCG, the PSCell of the target SCG being a PSCell carried in the first command; or
a third mobility history information generated by the UE in a time period from received the first command to received a second command, the second command carrying an SCG activation indication.

In an optional embodiment, the first mobility history information includes at least one of the following:
an identifier of the PSCell of the source SCG;
a time interval from the UE accessing the PSCell of the source SCG to the UE activating an SCG;
a time interval from the UE accessing the PSCell of the source SCG to the UE accessing the PSCell of the target SCG;
indication information used to indicate that the UE has received the first command;
number of times the first command is received;
an identifier of the PSCell of the target SCG included in each first command;
each first command;
each time interval from the UE accessing the PSCell of the source SCG to receiving each first command;
a time interval from the UE accessing the PSCell of the source SCG to receiving the first command for the first time;
a time interval between two adjacent receptions of the first command;
a time interval from receiving the first command for the first time to receiving the second command;
radio resource management, RRM, measurement result information; or
beam measurement result information.

In an optional embodiment, the first command is any of the following: a PSCell change command, a PSCell addition command, a handover command, and a radio resource control, RRC, resume command.

In an optional embodiment, the second mobility history information includes at least one of the following:
an identifier of the PSCell of the target SCG included in each first command, and a time interval between two adjacent receptions of the first command;
first indication information, the first indication information being used to indicate that the UE has not performed a RACH procedure to access the PSCell of the target SCG;
second indication information, the second indication information being used to indicate whether the UE activates the PSCell of the target SCG or whether the UE performs the RACH procedure to access the PSCell of the target SCG before the UE receives a next SCG reconfiguration with sync command;
each time interval from receiving each first command to receiving the second command;
RRM measurement result information; or
beam measurement result information.

In an optional embodiment, the third mobility history information includes at least one of the following:
an identifier of the PSCell of the source SCG and an identifier of the PSCell of the target SCG that are included in each first command;
an identifier of the PSCell of the source SCG included in the first command for the first time, and an identifier of the PSCell of the target SCG included in the second command;
a time interval between two adjacent receptions of the first command;
each time interval from receiving each first command to receiving the second command;
number of times the first command is received;
each first command received;
RRM measurement result information; or
beam measurement result information.

In an optional embodiment, subsequent to the recording the mobility history information of the UE on SCG side, the method further includes:
reporting the mobility history information on SCG side to a master node, MN, or a secondary node, SN.

In a second aspect, the application provides a UE, including:
a receiving unit configured to receive a first command, the first command including an SCG reconfiguration with sync command and an SCG deactivation indication; and
a recording unit configured to record a mobility history information generated by the UE at SCG side.

In a third aspect, the application provides a UE, including a memory, a transceiver, and a processor;
the memory being configured to store computer instructions;
the transceiver being configured to send and receive data under control of the processor; and
the processor being configured to read the computer instructions in the memory and perform the following steps:
   receiving a first command, the first command including an SCG reconfiguration with sync command and an SCG deactivation indication; and
   recording a mobility history information generated by the UE at SCG side.

In an optional embodiment, the mobility history information includes at least one of the following:
a first mobility history information generated by the UE in a PSCell of a source SCG, the PSCell of the source SCG being a PSCell currently accessed by the UE;
a second mobility history information generated by the UE in a PSCell of a target SCG, the PSCell of the target SCG being a PSCell carried in the first command; or
a third mobility history information generated by the UE in a time period from received the first command to received a second command, the second command carrying an SCG activation indication.

In an optional embodiment, the first mobility history information includes at least one of the following:
an identifier of the PSCell of the source SCG;
a time interval from the UE accessing the PSCell of the source SCG to the UE activating an SCG;
a time interval from the UE accessing the PSCell of the source SCG to the UE accessing the PSCell of the target SCG;
indication information used to indicate that the UE has received the first command;
number of times the first command is received;
an identifier of the PSCell of the target SCG included in each first command;
each first command;
each time interval from the UE accessing the PSCell of the source SCG to receiving each first command;
a time interval from the UE accessing the PSCell of the source SCG to receiving the first command for the first time;
a time interval between two adjacent receptions of the first command;
a time interval from receiving the first command for the first time to receiving the second command;
RRM measurement result information; or
beam measurement result information.

In an optional embodiment, the first command is any of the following: a PSCell change command, a PSCell addition command, a handover command, and an RRC resume command.

In an optional embodiment, the second mobility history information includes at least one of the following:
an identifier of the PSCell of the target SCG included in each first command, and a time interval between two adjacent receptions of the first command;
first indication information, the first indication information being used to indicate that the UE has not performed a RACH procedure to access the PSCell of the target SCG;
second indication information, the second indication information being used to indicate whether the UE activates the PSCell of the target SCG or whether the UE performs the RACH procedure to access the PSCell of the target SCG before the UE receives a next SCG reconfiguration with sync command;
each time interval from receiving each first command to receiving the second command;
RRM measurement result information; or
beam measurement result information.

In an optional embodiment, the third mobility history information includes at least one of the following:
an identifier of the PSCell of the source SCG and an identifier of the PSCell of the target SCG that are included in each first command;
an identifier of the PSCell of the source SCG included in the first command for the first time, and an identifier of the PSCell of the target SCG included in the second command;
a time interval between two adjacent receptions of the first command;
each time interval from receiving each first command to receiving the second command;
number of times the first command is received;
a type of each first command received;
RRM measurement result information; or
beam measurement result information.

In an optional embodiment, the processor may be further configured to:
report the mobility history information on SCG side to an MN or an SN.

In a fourth aspect, the application provides a computer-readable storage medium, where the storage medium stores computer instructions, the computer instructions, when executed by a processor, implementing the method as described in any one of the embodiments in the first aspect.

With the method for information processing, the UE and the storage medium provided in the embodiments of the application, after receiving a first command, the UE can record a mobility history information generated by the UE at SCG side, where the first command includes an SCG reconfiguration with sync command and an SCG deactivation indication. By means of the method, when the UE receives an SCG reconfiguration with sync command and indicates an SCG in deactivation state, the UE would still record mobility history information on SCG side.

### BRIEF DESCRIPTION OF THE DRAWINGS

In order to more clearly illustrate the technical solutions in embodiments of the application or the prior art, the accompanying drawings used in the description of the embodiments or the prior art are briefly introduced below. It is apparent that, the accompanying drawings in the following description are only for some embodiments of the application, and other drawings can be obtained by those of ordinary skill in the art from the provided drawings without creative efforts.
FIG. 1 is a diagram of a scenario to which a method for information processing is applied according to an embodiment of the application;
FIG. 2 is a flowchart of interaction of a method for information processing according to an embodiment of the application;
FIG. 3 is a schematic flowchart of a method for information processing according to an embodiment of the application;
FIG. 4 is a structural block diagram of a UE according to an embodiment of the application;
FIG. 5 is another structural block diagram of a UE according to an embodiment of the application; and
FIG. 6 is a schematic structural diagram of a UE according to an embodiment of the application.

### DETAILED DESCRIPTION OF THE EMBODIMENTS

Specific implementations of the application are described in detail below with reference to the accompanying drawings. It should be understood that the specific implementations described herein are only intended to illustrate and explain the application, and are not intended to limit the application.

It is to be noted that terms such as "first" and "second" used in the embodiments of the application are intended to distinguish similar objects, but are not intended to describe any specific sequence or precedence order. The term "and/or" in the embodiments of the application is merely an association relationship describing associated objects, indicating that three relationships may exist. For example, A and/or B indicates that there are three cases of A alone, A and B together, and B alone. The character "/" herein generally means that associated objects before and after such character are in an "or" relationship.

Network architectures and service scenarios that are described in the embodiments of the application are intended to describe the technical solutions in the embodiments of the application more clearly, and do not constitute a limitation on the technical solutions provided in the embodiments of the application. Those of ordinary skill in the art may be aware that, with evolution of the network architectures and emergence of new service scenarios, the technical solutions provided in the embodiments of the application are also applicable to similar technical problems.

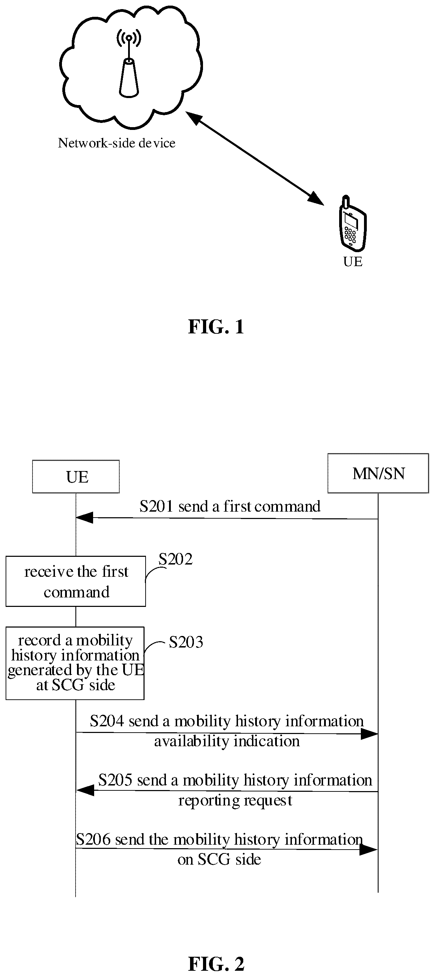

FIG. 1 is a diagram of a scenario to which a method for information processing is applied according to an embodiment of the application. The embodiment of the application is applicable to a multi-connectivity scenario. The multi-connectivity scenario at least includes one UE and one network-side device. The network-side device may be an MN or an SN. The UE may be a mobile phone, a pad, a computer with a wireless transceiving function, a virtual reality, VR, terminal, an augmented reality, AR, terminal, a wireless terminal in industrial control, or the like.

In the multi-connectivity scenario, one primary cell group and one or more SCGs may be included. A cell group on an MN side is a primary cell group, including one primary cell and zero to multiple secondary cells. A cell group on an SN side is an SCG, including one PSCell and zero to multiple secondary cells.

The MN, SN or UE may request activating the SCG, and an SCG activation command triggered by a network side may be sent by the MN to the UE. The MN or SN may request deactivating the SCG, and an SCG deactivation command triggered by the network side may be sent by the MN to the UE. During SCG activation or deactivation, interaction between UE and network-side device or between network-side devices may be implemented through RRC signaling.

The inventor has found that when the UE receives a PSCell change command, a PSCell addition command, a handover command, or an RRC resume command, the received command indicating an SCG deactivation state, the UE does not immediately perform an RACH procedure to access a PSCell of a target SCG, but waits until the SCG is activated and then performs the RACH procedure to access the PSCell of the target SCG. Current recording and reporting of mobility history information of the UE on SCG side may be affected. That is, the UE does not know whether the UE should continue to record mobility history information of a PSCell of a source SCG or start recording mobility history information of the PSCell of the target SCG.

If the UE continues to record the mobility history information of the PSCell of the source SCG, after the mobility history information is reported to the network side, the network side may consider that the PSCell of the source SCG is always in a connected state and may transmit data normally in a period of time from the UE receiving the PSCell change command, the PSCell addition command, the handover command, or the RRC resume command to SCG activation. However, in fact, the network side has notified the UE to access the PSCell of the target SCG. In this case, uplink, UL, or downlink, DL, of the PSCell of the source SCG may already be out of synchronization, but because there is no transmission service on the SCG side, there is no need to immediately access a target SCG side.

If the UE starts recording the mobility history information of the PSCell of the target SCG, after the mobility history information is reported to the network side, the network side may consider that the PSCell of the target SCG is always in a connected state and may transmit data normally in a period of time from the UE receiving the PSCell change command, the PSCell addition command, the handover command, or the RRC resume command to SCG activation. However, in fact, the UE has not performed the RACH procedure to access the PSCell of the target SCG.

Based on this, a method for information processing, a UE and a storage medium are provided according to embodiments of the application. After receiving a first command, the UE can record mobility history information generated by the UE at SCG side, where the first command includes an SCG reconfiguration with sync command and an SCG deactivation indication. By means of the method, when the UE receives the SCG reconfiguration with sync command and indicates an SCG in deactivation state, the UE would still record mobility history information on SCG side.

FIG. 2 is a flowchart of interaction of a method for information processing according to an embodiment of the application. As shown in FIG. 2, the method includes the following steps.

In step S201, an MN or an SN sends a first command to a UE.

When there is no data transmission on SCG side and handover from a PSCell where the UE is located is required, the MN or the SN may send the first command to the UE. The first command includes an SCG reconfiguration with sync command and an SCG deactivation indication. The SCG reconfiguration with sync command may also be written as a PSCell reconfiguration with sync command. The first command may be a command such as a PSCell change command, a PSCell addition command, a handover command, or an RRC resume command.

In step S202, the UE receives the first command.

In step S203, the UE records a mobility history information generated by the UE at SCG side.

In an optional implementation, the mobility history information on SCG side may include at least one of the following: a first mobility history information of a PSCell of a source SCG, the PSCell of the source SCG being a PSCell where the UE is currently located; a second mobility history information of a PSCell of a target SCG, the PSCell of the target SCG being a PSCell indicated by the first command; or a third mobility history information in a time period from received the first command to received a second command, the second command carrying an SCG activation indication.

In step S204, the UE sends a mobility history information availability indication to the MN or the SN.

In step S205, the MN or the SN sends a mobility history information reporting request to the UE.

In step S206, the UE sends the mobility history information on SCG side to the MN or the SN.

In an optional implementation, after recording the mobility history information on SCG side, the UE may send the mobility history information availability indication to the MN or the SN, receive the mobility history information reporting request sent by the MN or the SN, and report the mobility history information on SCG side to the MN or the SN according to the mobility history information reporting request.

The method for information processing provided in the application is to be described in detail below with reference to six embodiments.

### First Embodiment

The UE currently accesses a PSCell of a source SCG, and the SCG is in an activation state. If the UE receives a first command including an SCG reconfiguration with sync command and indicating an SCG deactivation state, the UE may continue to record an identifier of the PSCell of the source SCG, and a time interval from the UE accessing the PSCell of the source SCG to the UE activating the SCG or a time interval from the UE accessing the PSCell of the source SCG to the UE successfully accessing a PSCell of a target SCG by performing a RACH procedure, and at least one of following first mobility history information. The first command may be any one of a PSCell change command, a handover command, and an RRC resume command.

The ID of the PSCell of the source SCG is an optional ID of the PSCell of the source SCG. In the embodiment of the application, the ID may be a physical cell identifier, PCI, and a frequency point, or may be a cell global identifier, CGI.

That is, when the UE receives any one of the PSCell change command, the handover command, and the RRC resume command (the command carries information of the PSCell of the target SCG) and the command indicates the SCG deactivation state, the UE may continue to record the ID of the PSCell of the source SCG and at least one of first mobility history information as described below.
1. Indication information used to indicate that the UE has received the first command. That is, when the UE receives the PSCell change command, the handover command, or the RRC resume command and the SCG deactivation state is indicated, the UE may record a piece of reception indication information to indicate that the UE has received the first command. Moreover, regardless of how many first commands have been received by the UE before the UE activates the SCG or before the UE successfully accesses the PSCell of the target SCG by performing the RACH procedure, the UE records only one piece of indication information.
2. Number of times the first command is received. That is, the UE counts and records the number of times the first command is received before activating the SCG or before successfully accessing the PSCell of the target SCG by performing the RACH procedure.
3. An identifier of the PSCell of the target SCG included in each first command. That is, the UE may record the identifier of the PSCell of the target SCG included in each first command received before activating the SCG or before successfully accessing the PSCell of the target SCG by performing the RACH procedure, for example, an ID of the PSCell of the target SCG, which may be recorded in a form of a list.
4. Each first command. That is, the UE may record each first command received before activating the SCG or before successfully accessing the PSCell of the target SCG by performing the RACH procedure. The first command may be a PSCell change command, a PSCell addition command, a handover command, or an RRC resume command, and may be recorded in a form of a list.
5. Each time interval from the UE accessing the PSCell of the source SCG to receiving each first command. That is, a duration from the UE accessing the PSCell of the source SCG to the UE receiving each first command may be recorded, and may be recorded in a form of a list.
6. A time interval from the UE accessing the PSCell of the source SCG to receiving the first command for the first time. That is, a duration from the UE accessing the PSCell of the source SCG to the UE receiving the first command for the first time may be recorded.
7. A time interval between two adjacent receptions of the first command.
8. A time interval from receiving the first command for the first time to receiving the second command. That is, the UE may record a duration from receiving the first command for the first time to receiving an ordinary SCG activation command, or may record a duration from the UE receiving the first command for the first time to receiving a PSCell change command, a handover command, or an RRC resume command which indicates an SCG activation state.
9. RRM measurement result information.
10. Beam measurement result information.

In an embodiment, the UE may record a duration from receiving the first command for the last time to receiving an ordinary SCG activation command, or may record a duration from the UE receiving the first command for the last time to receiving a PSCell change command, a handover command, or an RRC resume command which indicates an SCG activation state.

After recording mobility history information on SCG side, the UE may report an SCG-side UE mobility history information availability indication to the MN or the SN. After receiving the availability indication, the MN or the SN may request, through a UE information request message, the UE to report the mobility history information on SCG side. The UE information request is an optional mobility history information reporting request. After receiving the UE information request message, the UE may report the recorded mobility history information on SCG side to the MN or the SN through a UE information response message.

After receiving the mobility history information on SCG side reported by the UE, the MN or the SN may analyze whether the UE has received a first command in the PSCell of the source SCG, that is, a PSCell change command, a handover command, or an RRC resume command which indicates an SCG deactivation state. If the MN or the SN analyzes that the UE has received the first command, it may be analyzed that after the UE receives the first command, the UE may actually be out of synchronization with UL and DL of the PSCell of the source SCG, so that further analysis and optimization are then performed.

### Second Embodiment

The UE is currently provided with no SCG. If the UE receives a first command including an SCG reconfiguration with sync command and indicating an SCG deactivation state, the first command may be any one of a PSCell addition command, a handover command, and an RRC resume command, since the UE has not been provided with any SCG before, no recording is performed. After the UE activates the SCG or successfully accesses a PSCell of a target SCG by performing a RACH procedure, mobility history information on SCG side starts to be recorded.

### Third Embodiment

The UE currently accesses a PSCell of a source SCG, and the SCG is in an activation state. After the UE receives a first command including an SCG reconfiguration with sync command, the UE may record at least one of second mobility history information as described below. That is, when the UE receives any one of a PSCell change command, a handover command, and an RRC resume command and an SCG deactivation state is indicated, the UE may record at least one of second mobility history information as described below.
1. An identifier of a PSCell of a target SCG included in each first command, and a time interval between two adjacent receptions of the first command. For example, the UE may record an ID of the PSCell of the target SCG included in each first command received, and a duration during which the UE stays in the PSCell of each target SCG, that is, a duration from the UE receiving each first command to receiving a next PSCell change command, handover command, or RRC resume command which indicates an SCG deactivation state or indicates an SCG activation state.
2. First indication information. The first indication information is used to indicate that the UE has not performed a RACH procedure to access the PSCell of the target SCG.
3. Second indication information. The second indication information is used to indicate whether the UE activates the PSCell of the target SCG or whether the UE performs the RACH procedure to access the PSCell of the target SCG before the UE receives a next SCG reconfiguration with sync command.
4. Each time interval from receiving each first command to receiving a second command, that is, a duration from the UE receiving each first command to the UE successfully accessing the PSCell by performing the RACH procedure.
5. RRM measurement result information.
6. Beam measurement result information.

After recording mobility history information on SCG side, the UE may report an SCG-side UE mobility history information availability indication to the MN or the SN. After receiving the availability indication, the MN or the SN may request, through a UE information request message, the UE to report the mobility history information on SCG side. After receiving the UE information request message, the UE may report the recorded mobility history information on SCG side to the MN or the SN through a UE information response message.

After receiving the mobility history information on SCG side reported by the UE, the MN or the SN may analyze during recording of a PSCell of a target SCG, whether the UE does not perform the RACH procedure to access the PSCell of the target SCG, that is, whether the UE has never been synchronized with UL of the PSCell of the target SCG, or analyze at what time the UE randomly accesses the PSCell of the target SCG, that is, at what time the UE synchronizes with the UL of the PSCell, so that further analysis and optimization are then performed.

### Forth Embodiment

The UE is currently provided with no SCG. After the UE receives a first command including an SCG reconfiguration with sync command, the UE may record at least one of second mobility history information as described below. The first command may be any one of a PSCell addition command, a handover command, and an RRC resume command. That is, when the UE receives any one of the PSCell addition command, the handover command, and the RRC resume command which indicates an SCG deactivation state, the UE may record at least one of second mobility history information as described below.
1. An identifier of a PSCell of a target SCG included in each first command, and a time interval between two adjacent receptions of the first command. For example, the UE may record an ID of the PSCell of the target SCG included in each first command received, and a duration during which the UE stays in the PSCell of each target SCG, that is, a duration from the UE receiving each first command to receiving a next PSCell change command, handover command, or RRC resume command which indicates an SCG deactivation state or indicates an SCG activation state.
2. First indication information. The first indication information is used to indicate that the UE has not performed a RACH procedure to access the PSCell of the target SCG.
3. Second indication information. The second indication information is used to indicate whether the UE activates the PSCell of the target SCG or whether the UE performs the RACH procedure to access the PSCell of the target SCG before the UE receives a next SCG reconfiguration with sync command.
4. Each time interval from receiving each first command to receiving a second command, that is, a duration from the UE receiving each first command to the UE successfully accessing the PSCell by performing the RACH procedure.
5. RRM measurement result information.
6. Beam measurement result information.

After recording mobility history information on SCG side, the UE may report an SCG-side UE mobility history information availability indication to the MN or the SN. After receiving the availability indication, the MN or the SN may request, through a UE information request message, the UE to report the mobility history information on SCG side. After receiving the UE information request message, the UE may report the recorded mobility history information on SCG side to the MN or the SN through a UE information response message.

After receiving the mobility history information on SCG side reported by the UE, the MN or the SN may analyze during recording of a PSCell of a target SCG, whether the UE does not perform the RACH procedure to access the PSCell of the target SCG, that is, whether the UE has never been synchronized with UL of the PSCell, or analyze at what time the UE randomly accesses the PSCell, that is, at what time the UE synchronizes with the UL of the PSCell, so that further analysis and optimization are then performed.

### Fifth Embodiment

The UE currently accesses a PSCell of a source SCG, and the SCG is in an activation state. After the UE receives a first command including an SCG reconfiguration with sync command, the UE stops recording an identifier and a duration of the PSCell of the source SCG, and starts to separately record mobility history information of the UE in a process from receiving the above first command to receiving a second command. That is, when the UE receives any one of a PSCell change command, a handover command, and an RRC resume command which indicates an SCG deactivation state, the UE may stop recording the identifier and the duration of the PSCell of the source SCG and start to separately record third mobility history information in this process. This process refers to a process from the UE receiving the first command for the first time to receiving the second command. The third mobility history information includes at least one of the following information.
1. An identifier of a PSCell of a source SCG and an identifier of a PSCell of a target SCG that are included in each first command; and an identifier of a PSCell of a source SCG and an identifier of a PSCell of a target SCG that are included in each second command received. For example, the UE may record an ID of the PSCell of the source SCG and an ID of the PSCell of the target SCG that are included in each first command in a new entry, and may record, in the new entry, an ID of the PSCell of the source SCG and an ID of the PSCell of the target SCG in a finally received PSCell change command, handover command or RRC resume command which indicates an SCG activation state; which may be recorded in a form of a list.
2. An identifier of the PSCell of the source SCG included in the first command for the first time, and an identifier of a PSCell of a target SCG included in the second command. For example, the UE may record, in the new entry, an ID of the PSCell of the source SCG included in the first command received for the first time and an ID of the PSCell of the target SCG included in the second command received.
3. A time interval between two adjacent receptions of the first command. For example, the UE may record, in the new entry, a duration from each reception of the first command to a next reception of the first command.
4. Each time interval from receiving each first command to receiving the second command. That is, the UE may record, in the new entry, a duration from each reception of the first command to reception of the second command, including a time interval from the UE receiving the first command for the last time to the UE receiving an ordinary SCG activation command, and a time interval from the UE receiving the first command for the last time to the UE receiving a PSCell change command, a handover command, or an RRC resume command which indicates an SCG activation state.
5. Number of times the first command is received. That is, the UE counts and records the number of times the first command is received before activating the SCG or before successfully accessing the PSCell of the target SCG by performing the RACH procedure.
6. Each first command received. That is, the UE may record each first command received before activating the SCG or before successfully accessing the PSCell of the target SCG by performing the RACH procedure. The first command may be a PSCell change command, a PSCell addition command, a handover command, or an RRC resume command, and may be recorded in a form of a list.
7. RRM measurement result information.
8. Beam measurement result information.

After recording mobility history information on SCG side, the UE may report an SCG-side UE mobility history information availability indication to the MN or the SN. After receiving the availability indication, the MN or the SN may request, through a UE information request message, the UE to report the mobility history information on SCG side. The UE information request is an optional mobility history information reporting request. After receiving the UE information request message, the UE may report the recorded mobility history information on SCG side to the MN or the SN through a UE information response message.

After receiving the mobility history information on SCG side reported by the UE, the MN or the SN may analyze that during staying of the UE in a PSCell, the UE may actually be out of synchronization with UL or DL of the PSCell, and the UE does not perform the RACH procedure to access the PSCell of the target SCG, that is, the UE is out of synchronization with the UL of the PSCell of the target SCG, and how long this state lasts; or may analyze what commands the UE receives before activating the SCG or performing the RACH procedure to access the PSCell of the target SCG, and an ID of the PSCell of the source SCG, an ID of the PSCell of the target SCG, and the like in each of the commands, so that further analysis and optimization are then performed.

### Sixth Embodiment

The UE is currently provided with no SCG. After the UE receives a first command including an SCG reconfiguration with sync command, the UE may start to separately record mobility history information of the UE in a process from receiving the above first command to receiving a second command. The first command may be any one of a PSCell addition command, a handover command, and an RRC resume command. That is, when the UE receives any one of the PSCell addition command, the handover command, and the RRC resume command which indicates an SCG deactivation state, the UE may start to separately record third mobility history information in this process. This process refers to a process from the UE receiving the first command for the first time to receiving the second command. The third mobility history information includes at least one of the following information.
1. An identifier of a PSCell of a source SCG and an identifier of a PSCell of a target SCG that are included in each first command; and an identifier of a PSCell of a source SCG and an identifier of a PSCell of a target SCG that are included in each second command received. For example, the UE may record an ID of the PSCell of the source SCG and an ID of the PSCell of the target SCG that are included in each first command in a new entry, and may record, in the new entry, an ID of the PSCell of the source SCG and an ID of the PSCell of the target SCG in a finally received PSCell change command, handover command or RRC resume command which indicates an SCG activation state; which may be recorded in a form of a list.
2. An identifier of the PSCell of the source SCG included in the first command for the first time, and an identifier of a PSCell of a target SCG included in the second command received. For example, the UE may record, in the new entry, an ID of the PSCell of the source SCG included in the first command received for the first time and an ID of the PSCell of the target SCG included in the second command received.
3. A time interval between two adjacent receptions of the first command. For example, the UE may record, in the new entry, a duration from each reception of the first command to a next reception of the first command.
4. Each time interval from receiving each first command to receiving the second command. That is, the UE may record, in the new entry, a duration from each reception of the first command to reception of the second command, including a time interval from the UE receiving the first command for the last time to the UE receiving an ordinary SCG activation command, and a time interval from the UE receiving the first command for the last time to the UE receiving a PSCell change command, a handover command, or an RRC resume command which indicates an SCG activation state.
5. Number of times the first command is received. That is, the UE counts and records the number of times the first command is received before activating the SCG or before successfully accessing the PSCell of the target SCG by performing the RACH procedure.
6. Each first command received. That is, the UE may record each first command received before activating the SCG or before successfully accessing the PSCell of the target SCG by performing the RACH procedure. The first command may be a PSCell change command, a PSCell addition command, a handover command, or an RRC resume command, and may be recorded in a form of a list.
7. RRM measurement result information.
8. Beam measurement result information.

After recording mobility history information on SCG side, the UE may report an SCG-side UE mobility history information availability indication to the MN or the SN. After receiving the availability indication, the MN or the SN may request, through a UE information request message, the UE to report the mobility history information on SCG side. The UE information request is an optional mobility history information reporting request. After receiving the UE information request message, the UE may report the recorded mobility history information on SCG side to the MN or the SN through a UE information response message.

After receiving the mobility history information on SCG side reported by the UE, the MN or the SN may analyze that during staying of the UE in a PSCell, the UE may actually be out of synchronization with UL or DL of the PSCell, and the UE does not perform the RACH procedure to access the PSCell of the target SCG, that is, the UE is out of synchronization with the UL of the PSCell of the target SCG, and how long this state lasts; or may analyze what commands the UE receives before activating the SCG or performing the RACH procedure to access the PSCell of the target SCG, and an ID of the PSCell of the source SCG, an ID of the PSCell of the target SCG, and the like in each of the commands, so that further analysis and optimization are then performed.

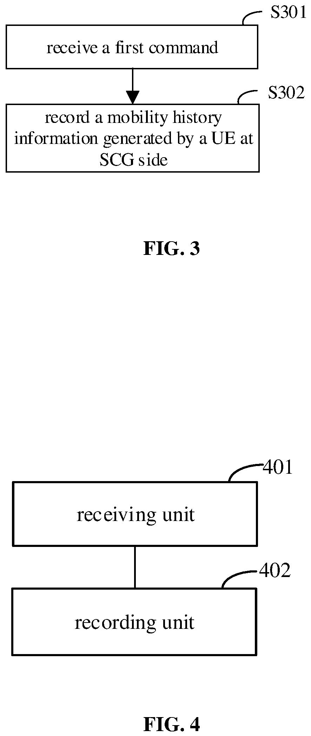

Based on a same inventive concept, a method for information processing is provided according to an embodiment of the application. As shown in FIG. 3, which is a flowchart of the method, the method includes the following steps.

In step S301, a first command is received.

The first command includes an SCG reconfiguration with sync command and an SCG deactivation indication.

In step S302, a mobility history information generated by a UE at SCG side is recorded.

In an optional embodiment, the mobility history information includes at least one of the following:
a first mobility history information generated by the UE in a PSCell of a source SCG, the PSCell of the source SCG being a PSCell currently accessed by the UE;
a second mobility history information generated by the UE in a PSCell of a target SCG, the PSCell of the target SCG being a PSCell carried in the first command; or
a third mobility history information generated by the UE in a time period from received the first command to received a second command, the second command carrying an SCG activation indication.

In an optional embodiment, the first mobility history information includes at least one of the following:
an identifier of the PSCell of the source SCG;
a time interval from the UE accessing the PSCell of the source SCG to the UE activating an SCG;
a time interval from the UE accessing the PSCell of the source SCG to the UE accessing the PSCell of the target SCG;
indication information used to indicate that the UE has received the first command;
number of times the first command is received;
an identifier of the PSCell of the target SCG included in each first command;
each first command;
each time interval from the UE accessing the PSCell of the source SCG to receiving each first command;
a time interval from the UE accessing the PSCell of the source SCG to receiving the first command for the first time;
a time interval between two adjacent receptions of the first command;
a time interval from receiving the first command for the first time to receiving the second command;
radio resource management, RRM, measurement result information; or
beam measurement result information.

In an optional embodiment, the first command is any of the following: a PSCell change command, a PSCell addition command, a handover command, and a radio resource control, RRC, resume command.

In an optional embodiment, the second mobility history information includes at least one of the following:
an identifier of a PSCell of a target SCG included in each first command, and a time interval between two adjacent receptions of the first command;
first indication information, the first indication information being used to indicate that the UE has not performed a RACH procedure to access the PSCell of the target SCG;
second indication information, the second indication information being used to indicate whether the UE activates the PSCell of the target SCG or whether the UE performs the RACH procedure to access the PSCell of the target SCG before the UE receives a next SCG reconfiguration with sync command;
each time interval from receiving each first command to receiving the second command;
RRM measurement result information; or
beam measurement result information.

In an optional embodiment, the third mobility history information includes at least one of the following:
an identifier of a PSCell of a source SCG and an identifier of a PSCell of a target SCG that are included in each first command;
an identifier of the PSCell of the source SCG included in the first command for the first time, and an identifier of a PSCell of a target SCG included in the second command;
a time interval between two adjacent receptions of the first command;
each time interval from receiving each first command to receiving the second command;
number of times the first command is received;
each first command;
RRM measurement result information; or
beam measurement result information.

In an optional embodiment, subsequent to the recording the mobility history information of the UE on SCG side, the method further includes:
reporting the mobility history information on SCG side to a master node, MN, or a secondary node, SN.

Based on a same inventive concept, a UE is provided in an embodiment of the application. As shown in FIG. 4, a receiving unit 401 and a recording unit 402 are included.

The receiving unit 401 is configured to receive a first command. The first command includes an SCG reconfiguration with sync command and an SCG deactivation indication.

The recording unit 402 is configured to record a mobility history information generated by the UE at SCG side.

In an optional embodiment, the mobility history information includes at least one of the following:
a first mobility history information generated by the UE in a PSCell of a source SCG, the PSCell of the source SCG being a PSCell currently accessed by the UE;
a second mobility history information generated by the UE in a PSCell of a target SCG, the PSCell of the target SCG being a PSCell carried in the first command; or
a third mobility history information generated by the UE in a time period from received the first command to received a second command, the second command carrying an SCG activation indication.

In an optional embodiment, the first mobility history information includes at least one of the following:
an identifier of the PSCell of the source SCG;
a time interval from the UE accessing the PSCell of the source SCG to the UE activating an SCG;
a time interval from the UE accessing the PSCell of the source SCG to the UE accessing the PSCell of the target SCG;
indication information used to indicate that the UE has received the first command;
number of times the first command is received;
an identifier of the PSCell of the target SCG included in each first command;
each first command;
each time interval from the UE accessing the PSCell of the source SCG to receiving each first command;
a time interval from the UE accessing the PSCell of the source SCG to receiving the first command for the first time;
a time interval between two adjacent receptions of the first command;
a time interval from receiving the first command for the first time to receiving the second command;
RRM measurement result information; or
beam measurement result information.

In an optional embodiment, the first command is any of the following: a PSCell change command, a PSCell addition command, a handover command, and an RRC resume command.

In an optional embodiment, the second mobility history information includes at least one of the following:
an identifier of a PSCell of a target SCG included in each first command, and a time interval between two adjacent receptions of the first command;
first indication information, the first indication information being used to indicate that the UE has not performed a RACH procedure to access the PSCell of the target SCG;
second indication information, the second indication information being used to indicate whether the UE activates the PSCell of the target SCG or whether the UE performs the RACH procedure to access the PSCell of the target SCG before the UE receives a next SCG reconfiguration with sync command;
each time interval from receiving each first command to receiving the second command;
RRM measurement result information; or
beam measurement result information.

In an optional embodiment, the third mobility history information includes at least one of the following:
an identifier of a PSCell of a source SCG and an identifier of a PSCell of a target SCG that are included in each first command received;
an identifier of the PSCell of the source SCG included in the first command received for the first time, and an identifier of a PSCell of a target SCG included in the second command;
a time interval between two adjacent receptions of the first command;
each time interval from receiving each first command to receiving the second command;
number of times the first command is received;
each first command received;
RRM measurement result information; or
beam measurement result information.

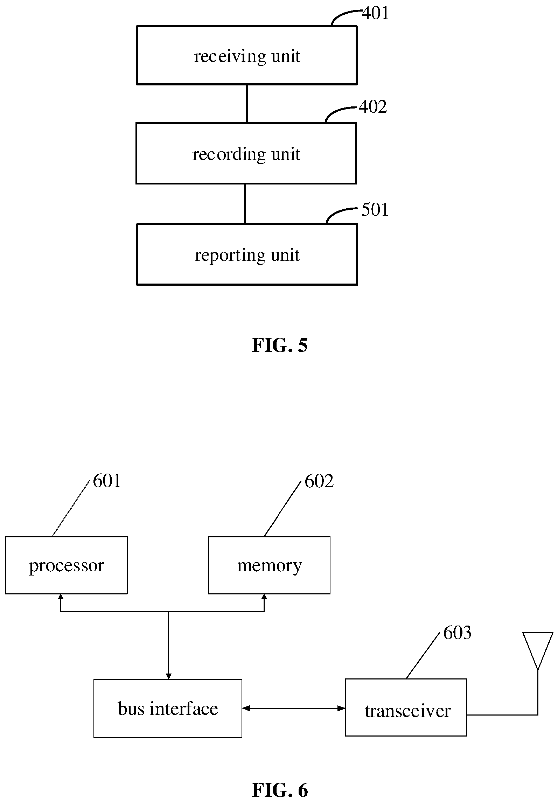

In an optional embodiment, in addition to the recording unit 402, a reporting unit 501 may further be included. As shown in FIG. 5, the reporting unit 501 is specifically configured to:
report the mobility history information on SCG side to an MN or an SN.

Based on a same technical concept, a UE is further provided according to an embodiment of the application. The UE can perform any of the methods for information processing implemented in the above embodiments.

FIG. 6 is schematic structural diagram of the UE according to the embodiment of the application. As shown in FIG. 6, the UE includes a processor 601, a memory 602, and a transceiver 603.

The processor 601 is responsible for managing a bus architecture and general processing. The memory 602 may store data used by the processor 601 when performing an operation. The transceiver 603 is configured to receive and send data under control of the processor 601.

The bus architecture may include any quantity of interconnected buses and bridges, and specifically links circuits such as one or more processors represented by the processor 601 and one or more memories represented by the memory 602 together. The bus architecture may further link various other circuits such as a peripheral device, a voltage regulator, and a power management circuit together, which are well known in the art, and therefore, no further description is provided therein. A bus interface provides an interface. The processor 601 is responsible for managing a bus architecture and general processing. The memory 602 may store data used by the processor 601 when performing an operation.

The process disclosed in the embodiments of the application may be applied to the processor 601 or implemented by the processor 601. During the implementation, each step of a signal processing flow may be completed by using an integrated logical circuit of hardware or an instruction in a software form in the processor 601. The processor 601 may be a general-purpose processor, a digital signal processor, an application-specific integrated circuit, a field programmable gate array or another programmable logical device, a discrete gate or a transistor logical device, or a discrete hardware component, which may implement or perform the methods, steps, and logical block diagrams disclosed in the embodiments of the application. The general-purpose processor may be a microprocessor or any conventional processor or the like. With reference to the methods disclosed in the embodiments of the application, steps may be represented directly as being implemented by a hardware processor, or implemented by a combination of hardware modules and software modules in a processor. The software module may be located in a storage medium mature in the art, such as a random access memory, a flash memory, a read-only memory, a programmable read-only memory, an electrically erasable programmable memory, or a register. The storage medium is located in the memory 602, and the processor 601 reads information in the memory 602 and completes the steps of the signal processing flow in combination with hardware thereof.

Specifically, the processor 601 is configured to read a computer program in the memory 602. The processor 601, when executing the computer program, implements the following steps:
receiving a first command, the first command including an SCG reconfiguration with sync command and an SCG deactivation indication; and
recording a mobility history information generated by the UE at SCG side.

In an optional embodiment, the mobility history information includes at least one of the following:
a first mobility history information generated by the UE in a PSCell of a source SCG, the PSCell of the source SCG being a PSCell currently accessed by the UE;
a second mobility history information generated by the UE in a PSCell of a target SCG, the PSCell of the target SCG being a PSCell carried in the first command; or
a third mobility history information generated by the UE in a time period from received the first command to received a second command, the second command carrying an SCG activation indication.

In an optional embodiment, the first mobility history information includes at least one of the following:
an identifier of the PSCell of the source SCG;
a time interval from the UE accessing the PSCell of the source SCG to the UE activating an SCG;
a time interval from the UE accessing the PSCell of the source SCG to the UE accessing the PSCell of the target SCG;
indication information used to indicate that the UE has received the first command;
number of times the first command is received;
an identifier of the PSCell of the target SCG included in each first command;
each first command;
each time interval from the UE accessing the PSCell of the source SCG to receiving each first command;
a time interval from the UE accessing the PSCell of the source SCG to receiving the first command for the first time;
a time interval between two adjacent receptions of the first command;
a time interval from receiving the first command for the first time to receiving the second command;
RRM measurement result information; or
beam measurement result information.

In an optional embodiment, the first command is any of the following: a PSCell change command, a PSCell addition command, a handover command, and an RRC resume command.

In an optional embodiment, the second mobility history information includes at least one of the following:
an identifier of a PSCell of a target SCG included in each first command, and a time interval between two adjacent receptions of the first command;
first indication information, the first indication information being used to indicate that the UE has not performed a RACH procedure to access the PSCell of the target SCG;
second indication information, the second indication information being used to indicate whether the UE activates the PSCell of the target SCG or whether the UE performs the RACH procedure to access the PSCell of the target SCG before the UE receives a next SCG reconfiguration with sync command;
each time interval from receiving each first command to receiving the second command;
RRM measurement result information; or
beam measurement result information.

In an optional embodiment, the third mobility history information includes at least one of the following:
an identifier of a PSCell of a source SCG and an identifier of a PSCell of a target SCG that are included in each first command;
an identifier of the PSCell of the source SCG included in the first command for the first time, and an identifier of a PSCell of a target SCG included in the second command received;
a time interval between two adjacent receptions of the first command;
each time interval from receiving each first command to receiving the second command;
number of times the first command is received;
each first command received;
RRM measurement result information; or
beam measurement result information.

In an optional embodiment, the processor may be further configured to:
report the mobility history information on SCG side to an MN or an SN.

Those skilled in the art should understand that the embodiments of the application may be provided as a method, a system, or a computer program product. Therefore, the application may adopt a form of hardware only embodiments, software only embodiments, or embodiments with a combination of software and hardware. In addition, the application may adopt a form of a computer program product that is implemented on one or more computer-usable storage media (including, but not limited to, a disk memory, a compact disc read-only memory, CD-ROM, an optical memory, and the like) that include computer-usable program code.

The application is described with reference to the flowcharts and/or block diagrams of the method, the device (system), and the computer program product according to the embodiments of the application. It should be understood that computer program instructions may be used to implement each process and/or each block in the flowcharts and/or the block diagrams and a combination of a process and/or a block in the flowcharts and/or the block diagrams. These computer program instructions may be provided to a processor of a general-purpose computer, a special-purpose computer, an embedded processor, or another programmable data processing device to generate a machine, so that an instruction that is executed by a processor of a computer or another programmable data processing device generates an apparatus configured to implement a specified function in one or more processes in the flowcharts and/or in one or more blocks in the block diagrams.

These computer program instructions may alternatively be stored in a computer-readable memory that can instruct the computer or the another programmable data processing device to operate in a specific manner, so that the instructions stored in the computer-readable memory generate an artifact that includes an instruction apparatus. The instruction apparatus implements a specific function in one or more processes in the flowcharts and/or in one or more blocks in the block diagrams.

These computer program instructions may also be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specified function in one or more processes in the flowcharts and/or in one or more blocks in the block diagrams.

Obviously, those skilled in the art can make various modifications and variations to the application without departing from the spirit and scope of the application. If these modifications and variations of the application fall within the scope of the claims of the application and equivalent technologies thereof, the application is also intended to cover these modifications and variations.

## Claims

1. A method for information processing, applied to a user equipment, UE, **characterized by** comprising:
receiving a first command, the first command comprising a secondary cell group, SCG, reconfiguration with sync command and an SCG deactivation indication; and
recording a mobility history information generated by the UE at SCG side.

2. The method of claim 1, wherein the mobility history information comprises at least one of the following:
a first mobility history information generated by the UE in a primary SCG cell, PSCell, of a source SCG, the PSCell of the source SCG being a PSCell currently accessed by the UE;
a second mobility history information generated by the UE in a PSCell of a target SCG, the PSCell of the target SCG being a PSCell carried in the first command; or
a third mobility history information generated by the UE in a time period from received the first command to received a second command, the second command carrying an SCG activation indication.

3. The method of claim 2, wherein the first mobility history information comprises at least one of the following:
an identifier of the PSCell of the source SCG;
a time interval from the UE accessing the PSCell of the source SCG to the UE activating an SCG;
a time interval from the UE accessing the PSCell of the source SCG to the UE accessing the PSCell of the target SCG;
indication information used to indicate that the UE has received the first command;
number of times the first command is received;
an identifier of the PSCell of the target SCG comprised in each first command;
each first command;
each time interval from the UE accessing the PSCell of the source SCG to receiving each first command;
a time interval from the UE accessing the PSCell of the source SCG to receiving the first command for the first time;
a time interval between two adjacent receptions of the first command;
a time interval from receiving the first command for the first time to receiving the second command;
radio resource management, RRM, measurement result information; or
beam measurement result information.

4. The method of claim 3, wherein the first command is any of the following: a PSCell change command, a PSCell addition command, a handover command, or a radio resource control, RRC, resume command.

5. The method of claim 2, wherein the second mobility history information comprises at least one of the following:
an identifier of the PSCell of the target SCG comprised in each first command, and a time interval between two adjacent receptions of the first command;
first indication information, the first indication information being used to indicate that the UE has not performed a random access channel, RACH, procedure to access the PSCell of the target SCG;
second indication information, the second indication information being used to indicate whether the UE activates the PSCell of the target SCG or whether the UE performs the RACH procedure to access the PSCell of the target SCG before the UE receives a next SCG reconfiguration with sync command;
each time interval from receiving each first command to receiving the second command;
RRM measurement result information; or
beam measurement result information.

6. The method of claim 2, wherein the third mobility history information comprises at least one of the following:
an identifier of the PSCell of the source SCG and an identifier of the PSCell of the target SCG that are comprised in each first command;
an identifier of the PSCell of the source SCG comprised in the first command for the first time, and an identifier of the PSCell of the target SCG comprised in the second command;
a time interval between two adjacent receptions of the first command;
each time interval from receiving each first command to receiving the second command;
number of times the first command is received;
each first command;
RRM measurement result information; or
beam measurement result information.

7. The method of any one of claims 1 to 6, wherein subsequent to the recording the mobility history information of the UE at SCG side, the method further comprises:
reporting the mobility history information on SCG side to a master node, MN, or a secondary node, SN.

8. A user equipment, UE, comprising a memory, a transceiver, and a processor, **characterized in that**:
the memory is configured to store computer instructions;
the transceiver is configured to send and receive data under control of the processor; and
the processor is configured to read the computer instructions in the memory and perform the following steps:
receiving a first command, the first command comprising a secondary cell group, SCG, reconfiguration with sync command and an SCG deactivation indication; and
recording a mobility history information generated by the UE at SCG side.

9. The UE of claim 8, wherein the mobility history information of the UE at SCG side comprises at least one of the following information:
a first mobility history information generated by the UE in a primary SCG cell, PSCell, of a source SCG, the PSCell of the source SCG being a PSCell currently accessed by the UE;
a second mobility history information generated by the UE in a PSCell of a target SCG, the PSCell of the target SCG being a PSCell carried in the first command; or
a third mobility history information generated by the UE in a time period from received the first command to received a second command, the second command carrying an SCG activation indication.

10. The UE of claim 9, wherein the first mobility history information comprises at least one of the following:
an identifier of the PSCell of the source SCG;
a time interval from the UE accessing the PSCell of the source SCG to the UE activating an SCG;
a time interval from the UE accessing the PSCell of the source SCG to the UE accessing the PSCell of the target SCG;
indication information used to indicate that the UE has received the first command;
number of times the first command is received;
an identifier of the PSCell of the target SCG comprised in each first command;
each first command;
each time interval from the UE accessing the PSCell of the source SCG to receiving each first command;
a time interval from the UE accessing the PSCell of the source SCG to receiving the first command for the first time;
a time interval between two adjacent receptions of the first command;
a time interval from receiving the first command for the first time to receiving the second command;
radio resource management, RRM, measurement result information; or
beam measurement result information.

11. The UE of claim 10, wherein the first command is any of the following: a PSCell change command, a PSCell addition command, a handover command, or a radio resource control, RRC, resume command.

12. The UE of claim 9, wherein the second mobility history information comprises at least one of the following:
an identifier of the PSCell of the target SCG comprised in each first command, and a time interval between two adjacent receptions of the first command;
first indication information, the first indication information being used to indicate that the UE has not performed a random access channel, RACH, procedure to access the PSCell of the target SCG;
second indication information, the second indication information being used to indicate whether the UE activates the PSCell of the target SCG or whether the UE performs the RACH procedure to access the PSCell of the target SCG before the UE receives a next SCG reconfiguration with sync command;
each time interval from receiving each first command to receiving the second command;
RRM measurement result information; or
beam measurement result information.

13. The UE of claim 9, wherein the third mobility history information comprises at least one of the following:
an identifier of the PSCell of the source SCG and an identifier of the PSCell of the target SCG that are comprised in each first command;
an identifier of the PSCell of the source SCG comprised in the first command for the first time, and an identifier of the PSCell of the target SCG comprised in the second command;
a time interval between two adjacent receptions of the first command;
each time interval from receiving each first command to receiving the second command;
number of times the first command is received;
each first command;
RRM measurement result information; or
beam measurement result information.

14. The UE of any one of claims 8 to 13, wherein the processor is further configured to:
report the mobility history information on SCG side to a master node, MN, or a secondary node, SN, after recording the mobility history information generated by the UE at SCG side.

15. A user equipment, UE, **characterized by** comprising:
a receiving unit, configured to receive a first command, the first command comprising a secondary cell group, SCG, reconfiguration with sync command and an SCG deactivation indication; and
a recording unit, configured to record a mobility history information generated by the UE at SCG side.

16. A computer-readable storage medium, **characterized in that** the storage medium stores computer instructions, and the computer instructions, when executed by a processor, implement the method of any one of claims 1 to 7.
